# EUROPÄISCHE PATENTSCHRIFT

(11) **EP 0 911 733 B1**
(45) Veröffentlichungstag und Bekanntmachung des Hinweises auf die Patenterteilung: **26.11.2003**
(21) Anmeldenummer: 98115551.8
(22) Anmeldetag: 18.08.1998
(51) Int. Cl.: G06F 11/00, G06F 13/24

(54) **Schaltungsanordnung zur Erzeugung eines Interruptsignals für einen Mikroprozessor**
Circuit for interrupt signal generation in a microprocessor
Circuit de génération de signal d' interruption pour un microprocesseur

(30) Priorität: 09.09.1997 DE 19739530
(43) Veröffentlichungstag der Anmeldung: 28.04.1999
(73) Patentinhaber: Infineon Technologies AG, 81669 München (DE)
(72) Erfinder: Barrenscheen, Jens, 81669 München (DE)
(74) Vertreter: Jannig, Peter, Dipl.-Ing.

(56) Entgegenhaltungen:
- DE-B- 2 654 247
- DE-C- 940 231
- US-A- 5 638 016
- PATENT ABSTRACTS OF JAPAN vol. 1996, no. 06, 28. Juni 1996 (1996-06-28) & JP 08 044572 A (NEC CORP), 16. Februar 1996 (1996-02-16)
- ANONYMOUS: "Sharing Method of Edge-Mode Interrupt Signal" IBM TECHNICAL DISCLOSURE BULLETIN, Bd. 38, Nr. 12, 1. Dezember 1995 (1995-12-01), Seiten 185-186, XP002167859 New York, US

## Beschreibung

Die Erfindung betrifft eine Schaltungsanordnung zur Erzeugung eines Interruptsignals für einen Mikroprozessor.

Mikroprozessoren und Microcontroller weisen bekanntlich Eingangsanschlüsse für den Betriebszustand der Schaltungsumgebung kennzeichnende Signale auf, so daß intern ein Interruptsignal erzeugbar ist, durch das ein Interruptzustand angezeigt wird. Der Mikroprozessor unterbricht daraufhin das momentan laufende Programm und arbeitet ein Unterprogramm ab, das auf den die Aktivierung des Interruptsignals auslösenden Zustand reagiert, wie in dem Gebrauchsmuster G 94 03 121.5 U1 beschrieben.

Bei der Steuerung komplexer Schaltfunktionen, beispielsweise bei taktweise betriebenen Lichtmoduln, Umrichtern oder bei der getakteten Regelung von Elektromotoren, sind eine Vielzahl von einzelnen Zustandssignalen sowie durch eine Kombination von Zustandssignalen gebildete Betriebszustände zu überwachen, um bei deren Auftreten mittels geeigneter Steuerung durch den Microcontroller auf den momentanen Betrieb der Anordnung einzuwirken. Herkömmliche Mikroprozessoren mit einzelnen, voneinander unabhängig verarbeiteten Zustandssignaleingängen sind hierbei überfordert.

Eine Überwachung mehrerer Zustandssignaleingänge ist zwar durch softwaregesteuerte zyklische Abfrage, sogenanntes Polling, möglich. Einerseits erfordert dies jedoch bei höherer Anzahl von zu überwachenden Zustandssignaleingängen einen nicht unerheblichen Rechenaufwand. Andererseits ist dadurch nicht gewährleistet, daß nur kurzzeitig vorliegende Betriebszustände, die einen Interrupt auslösen sollen, sicher erkannt werden.

In dem genannten Gebrauchsmuster G 94 03 121.5 U1 werden mehrere Interruptsignale über einen programmierbaren Verteiler auf den Interruptsignaleingang des Mikroprozessors aufgeschaltet.

In der DE 26 54 247 B1 wird ein Interruptsignal mittels einer Vergleicheranordnung erzeugt, durch die die Zustandsänderung der Signale auf einem Datenbus festgestellt wird.

Die Aufgabe der Erfindung besteht darin, für das Problem der Verarbeitung einer Vielzahl von Zustandssignalen zur Erzeugung eines Interruptsignals eine geeignete Lösung anzugeben.

Erfindungsgemäß wird diese Aufgabe durch eine Schaltungsanordnung nach den Merkmalen des Patentanspruchs 1 gelöst.

Die erfindungsgemäße Interruptschaltungsanordnung ermöglicht eine flexible, an die Systemanforderung angepaßte Überwachung einer Anzahl von Interruptsignalen.

Je nach Ausgestaltung des dritten logischen Verknüpfungselements können verschiedene Überwachungsmodi realisiert werden. Wenn dieses Verknüpfungselement als ODER-Verknüpfung ausgeführt ist, wird das mikroprozessorinterne Interruptsignal dann aktiviert, wenn an mindestens einem der Zustandssignaleingänge die jeweils abgefragte Bedingung vorliegt. Wenn dieses Verknüpfungselement eine UND-Verknüpfung ist, wird das mikroprozessorinterne Interruptsignal dann aktiviert, wenn eine vorbestimmte Kombination von Zustandssignalzuständen vorliegt. Der Interrupt wird nur dann ausgelöst, wenn ein bestimmtes Pulsmuster der eingegebenen Zustandssignale anliegt. Durch entsprechende Einstellung der den Flankendetektoren nachgeschalteten Demultiplexern wird der zur Überwachung anstehende Eingangszustand eingestellt. Wenn ein nachfolgend zur Überwachung anstehender Zustand in Abhängigkeit von einem momentan festgestellten Zustand konfiguriert wird, arbeitet der Mikroprozessor als interruptgesteuertes Zustandsrechenwerk (State-Machine). Die hardwaremäßige Realisierung der Überwachung der Zustandssignaleingänge des Mikroprozessors ermöglicht eine sichere, verzögerungsfreie Erkennung eines aus einer Vielzahl von Zustandssignalen gebildeten Interruptzustands ohne zusätzliche Belastung der Rechenkapazität des Prozessors. Zweckmäßigerweise werden die Zustandssignaleingänge als Port zusammengefaßt. Sie sind dadurch gemeinsam von der CPU des Microcontrollers ansprechbar.

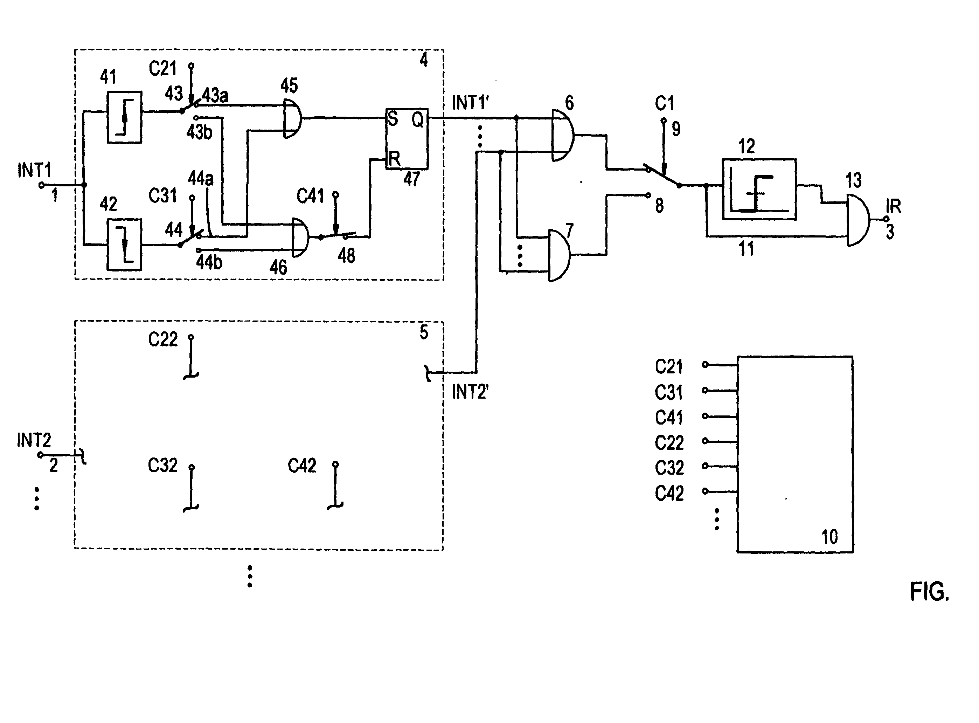

Nachfolgend wird die Erfindung anhand des in der Zeichnung dargestellten Ausführungsbeispiels näher erläutert. Es zeigt die einzige
- Figur: eine Schaltungsanordnung zur Erzeugung eines mikroprozessorinternen Interruptsignals für mehrere externe Zustandssignaleingänge.

Im Ausführungsbeispiel der Figur sind beispielhaft für eine Vielzahl von Eingangsanschlüssen, an die jeweils ein externes logisches Signal anzulegen ist, die Anschlüsse 1, 2 für die Signale INT1 bzw. INT2 dargestellt. Jedes der Signale INT1, INT2, ... repräsentiert eine Zustandseigenschaft der Gesamtschaltung, die vom Microcontroller überwacht und gesteuert wird. Durch die gezeigte Schaltung wird durch hardwaremäßige Verknüpfung am Ausgangsanschluß 3 das Signal IR erzeugt, welches dem Mikroprozessor oder Microcontroller, auf dem die gezeigte Schaltung angeordnet ist, mitteilt, daß ein Interruptzustand im System vorliegt. Die Signale INT1, INT2 werden je einer Einrichtung 4 bzw. 5 zugeführt, die ein Zwischensignal INT1' bzw. INT2' erzeugt. Die Zwischensignale werden einem (dritten) logischen Verknüpfungselement 6, im dargestellten Ausführungsbeispiel einem ODER-Gatter, zugeführt. Das chipinterne Interruptsignal IR wird daher dann aktiviert, wenn mindestens eines der Zwischensignale INT1' oder INT2' aktiviert ist. In Weiterbildung der Erfindung werden die Zwischensignale außerdem einem weiteren logischen Verknüpfungselement 7, hier einem UND-Gatter, zugeführt. Ein Umschalter oder Multiplexer 8 schaltet zwischen den Ausgängen der Verknüpfungsglieder 6, 7 um. Die Zwischensignale geben jeweils an, ob am zugeordneten Eingangssignalanschluß ein jeweiliger zu überwachender Zustand vorliegt. Durch das ODER-Verknüpfungsglied 6 wird festgestellt, ob bei mindestens einem der Eingangssignalanschlüsse der zu überwachende Zustand vorliegt. Durch den Umschalter 8 wird alternativ auf das UND-Verknüpfungsglied 7 umgeschaltet, so daß feststellbar ist, ob die Signale INT1, INT2, ... an den Eingangsanschlüssen 1, 2, ... eine vorgegebene Kombination von Zuständen einnehmen. Der Umschalter 8 ist durch das Steuersignal C1 an seinem Anschluß 9 entsprechend einstellbar.

Die die Zwischensignale erzeugenden Einrichtungen 4, 5 sind gleichartig aufgebaut. Beispielhaft ist die Einrichtung 4 im Detail dargestellt. Der Eingangssignalanschluß 1 wird auf einen Flankendetektor 41 für eine ansteigende Flanke und einen Flankendetektor 42 für eine fallende Flanke geführt. Ausgangsseitig ist an die Flankendetektoren 41, 42 je ein Demultiplexer 43 bzw. 44 angeschlossen. Die einen Ausgänge der Demultiplexer werden über ein (erstes) logisches Verknüpfungselement, hier ein ODER-Gatter 45, miteinander verknüpft, die jeweiligen anderen Ausgänge der Demultiplexer werden über ein (zweites) logisches Verknüpfungselement, hier ein ODER-Gatter 46, miteinander verknüpft. Das ODER-Gatter 45 steuert den Setzeingang eines Speicherelements 47, der Ausgang des ODER-Gatters 46 dessen Rücksetzeingang.

Die Einrichtung 4 arbeitet wie nachfolgend beschrieben. Wenn das Eingangssignal INT1 eine Flanke aufweist, spricht einer der Flankendetektoren 41 oder 42 an. Über das ODER-Gatter 45 wird das Flipflop 47 gesetzt; das Zwischensignal INT1' wird dadurch aktiviert. Dies bedeutet, daß irgendeine Pegeländerung des Eingangssignals INT1 das Zwischensignal INT1' aktiviert. Die Einstellung der Demultiplexer 43, 44 ist über ein jeweiliges Steuersignal C21 bzw. C31 steuerbar. Wenn in einer anderen, nicht dargestellten Einstellung der Einrichtung 4 der Schalter 43 mit seinem oberen Ausgangsanschluß 43a und der Schalter 44 mit seinem unteren Ausgangsanschluß 44b verbunden ist, wird das Zwischensignal INT1' dann aktiviert, wenn das Eingangssignal INT1 eine postive Flanke aufweist. Bei einer negativen Flanke wird das Flipflop 47 wieder rückgesetzt; das Zwischensignal INT1' wird dadurch wieder deaktiviert. Das Zwischensignal INT1' ist in diesem Beispiel solange aktiv, wie am Anschluß 1 ein H-Pegel für das Signal INT1 anliegt. Das Zwischensignal INT1' wird daher sensitiv für einen H-Pegel am Eingangsanschluß 1 erzeugt. Wenn der Schalter 43 mit seinem unteren Ausgangsanschluß 43b und der Schalter 44 mit seinem oberen Ausgangsanschluß 44a verbunden ist, wird das Zwischensignal INT1' solange aktiviert, wie am Anschluß 1 ein L-Pegel anliegt. Das Signal INT1' wird L-pegelsensitiv erzeugt.

Zweckmäßigerweise ist zwischen dem Ausgang des ODER-Gatters 46 und dem Rücksetzeingang des Flipflops 47 ein Schalter 48 angeordnet. Für die oben beschriebene H- oder L-pegelsensitive Überwachungsfunktion der Einrichtung 4 ist der Schalter 48 leitend geschaltet. Zur Steuerung des Schalters 48 dient ein Steuersignal C41. Wenn der Schalter 48 mit Schaltern 43, 44 in Stellung 43a, 44b geöffnet ist, wird das Zwischensignal INT1' dann aktiviert, wenn das Eingangssignal am Anschluß 1 eine positiv gerichtete Flanke aufweist. Eine negativ gerichtete Flanke bleibt unbeachtlich. Das Rücksetzen des Flip-Flops 47 und damit die Deaktivierung des Zwischensignals INT1' kann durch Softwaresteuerung durch den Prozessor erfolgen. Das Zwischensignal INT1' wird dann flankengetriggert auf eine positive Flanke hin erzeugt. Bei L-pegelsensitiver Konfiguration (d.h. Schalter 43, 44 in Stellung 43b, 44a) und wenn der Schalter 48 geöffnet ist, wird das Zwischensignal INT1' flankengetriggert bezüglich einer negativen Flanke erzeugt. Das Deaktivieren des Zwischensignals INT1' erfolgt wiederum softwaregesteuert. Wenn beide Schalter 43, 44 mit ihrem unteren Ausgangsanschluß 43b bzw. 44b verbunden sind sowie der Schalter 48 geöffnet ist, wird das Zwischensignal INT1' durch eine etwaige Signaländerung am Eingangsanschluß 1 nicht verändert. Die Überwachung des Eingangsanschlusses 1 ist dann abgeschaltet.

Durch entsprechende Einstellung der Schalter 43, 44, 48 über die jeweiligen Steuersignale C21, C31, C41 ist die Einrichtung 4 dahingehend konfigurierbar, daß der Eingangsanschluß 1 auf alle möglichen Signalzustände bzw. Signaländerungen des an ihm anliegenden Eingangssignals INT1 hin überwacht wird. Durch die jeweilige Einstellung der entsprechenden Schalter in der Einrichtung 5 und den (nicht dargestellten) übrigen Einrichtungen können die jeweils zugeordneten Zustandssignale INT1, INT2, ... auf alle möglichen Signalzustände und Signal-übergänge hin überwacht werden.

Wenn der Schalter 8 mit dem ODER-Gatter 6 verbunden ist, wird das mikroprozessorinterne Interruptsignal IR dann erzeugt, wenn an mindestens einem der Eingänge 1, 2, ... der nachgesuchte Zustand eingetreten ist. Wenn der Schalter 8 mit dem UND-Gatter 7 verbunden ist, wird das mikroprozessorinterne Interruptsignal IR dann erzeugt, wenn an allen eingangsseitigen Anschlüssen 1, 2, ... der zur Überwachung eingestellte Signalzustand gleichzeitig vorliegt. Es ist bei letzterer Einstellung des Schalters 8 die Überwachung nach dem Auftreten eines bestimmten Gesamtzustands des Systems möglich, z.B. daß an allen Eingängen bei flankensensitiver Einstellung (d.h. Schalter 48 offen) eine entsprechende Flanke aufgetreten ist, seit die Flip-Flops in den jeweiligen Einrichtungen (per Software) zurückgesetzt wurden.

Zweckmäßigerweise werden die Steuersignale C21, C31, C41, C22, C32, C42, ... von einem Speicher 10 bereitgestellt. Jedes dieser Signale wird von einem Bit des Speichers abgegeben. Der Microcontroller läßt sich daher als interruptgesteuertes Zustandsrechenwerk oder State-Machine betreiben, indem nach Feststellung des momentan über diese Steuersignale eingestellten, zu überwachenden Zustands ein durch den Speicher 10 vorgegebener nachfolgend zu überwachender Zustand konfiguriert wird, auf dessen Eintreten anschließend die an den Eingangsanschlüssen 1, 2, ... anliegenden Zustandssignale hin überwacht werden.

Zweckmäßigerweise wird nach dem Umschalter 8 eine Anordnung zur Unterdrückung von Störimpulsen angeordnet. Hierzu ist der Umschalter 8 ausgangsseitig einerseits über eine direkte Verbindung 11 und andererseits über ein Laufzeitglied 12 mit einstellbarer Verzögerung mit einem UND-Gatter 13 verbunden, an dessen Ausgang 3 das mikroprozessorinterne Interruptsignal IR anliegt. Das Verzögerungselement 12 ist beispielsweise eine Kette aus Flipflops oder ein mit im Vergleich zu den Schaltflanken der Eingangssignale INT1, INT2, ... mit hoher Taktfrequenz betriebener Zähler. Dadurch werden Störimpulse hardwaremäßig ausgefiltert.

Eine Anwendung der Schaltung, bei der das ODER-Gatter 6 auf den Ausgang 3 über den Schalter 8 durchgeschaltet ist, liegt in der Überwachung der Schaltertemperatur von Leistungshalbleiterschaltern in getaktet betriebenen Lichtmoduln oder Umrichtern. Speziell ausgeführte Leistungshalbleiterschalter erzeugen ein Signal, das Übertemperatur angibt. Diese Signale werden an die Eingangsanschlüsse 1, 2, ... angelegt. Wenn einer der Schalter Übertemperatur anzeigt, führt dies zur Aktivierung des Interruptsignals IR, so daß der Microcontroller sofort reagieren und gegensteuern kann.

Eine Anwendung, bei der das UND-Gatter 7 über den Schalter 8 an den Ausgangsanschluß 3 geschaltet ist, liegt in der Regelung von Elektrosynchronmotoren, bei denen abhängig vom momentanen Drehwinkel des Elektromotors eine Feldeinprägung zu erfolgen hat. Über eine Vielzahl von Steuerungsleitungen, die mit den Eingangsanschlüssen 1, 2, ... verbunden sind, wird die momentane Stellung des Motors festgestellt. Das Erreichen des abgefragten Drehwinkels wird dem Microcontroller über das Interruptsignal IR mitgeteilt, so daß dieser daraufhin die Schalttransistoren des Umrichters derart einstellt, daß drehwinkelgerecht die Felderregung für den Elektromotor erfolgt. Abhängig von der momentan festgestellten Position des Elektromotors werden die Schalter in den Einrichtungen 4, 5, ... mit dem Muster für die nachfolgend zu erwartende Motorposition eingestellt. Durch die rein hardwarebasierte Erzeugung des Interruptsignals wird der Microcontroller nicht mit zusätzlichem Rechenaufwand belastet. Da in derartig taktbetriebenen Systemen Störsignale auftreten können, dient die Verzögerungsschaltung 11, 12, 13 zur wirksamen hardwaremäßigen Unterdrückung von kurzzeitigen Störungen.

Aufgrund geeigneter Programmierung der in den Einrichtungen 4, 5, ... angeordneten Schalter werden die Signale an den jeweils zugeordneten Eingangsanschlüssen 1, 2, ... auf jede beliebige Kombination von Zustandssignalmustern hin überwacht, so daß nach Feststellung der Kombination durch den Mikroprozessor vorgegebene Reaktionen ausgeführt werden. Die Interruptstruktur ist flexibel und einfach programmierbar und erfordert keinen zusätzlichen Rechenaufwand.

## Patentansprüche

1. Schaltungsanordnung zur Erzeugung eines Interruptsignals (IR) für einen Mikroprozessor, durch dessen Aktivierung die Abarbeitung eines Unterprogramms im Mikroprozessor veranlaßt wird, umfassend
- mindestens zwei Eingangssignalanschlüsse (1, 2) zum Anlegen je eines logischen Signals (INT1, INT2),
**dadurch gekennzeichnet, daß** die Schaltungsanardnung weiter
- je eine den Eingangsanschlüssen (1, 2) zugeordnete Einrichtung (4, 5) zur Erzeugung eines Zwischensignals (INT1', INT2'),
- die jeweils einen ersten Flankendetektor (41) für eine ansteigende Flanke und einen zweiten Flankendetektor (42) für eine fallende Flanke enthält, die eingangsseitig mit dem zugeordneten Eingangsanschluß (1) verbunden sind,
- je einen den Flankendetektoren (41, 42) nachgeschalteten Demultiplexer (43, 44) enthält, deren erste Ausgänge (43a, 44a) an ein erstes logisches Verknüpfungslement (45) und deren zweite Ausgänge (43b, 44b) an ein zweites logisches Verknüpfungselement (46) angeschlossen sind, und
- ein Speicherelement (47) enthält, dessen Setzeingang (S) mit dem ersten logischen Verknüpfungselement (45) und dessen Rücksetzeingang (R) mit dem zweiten logischen Verknüpfungselement (46) verbunden ist, und
- ein drittes logisches Verknüpfungselement (6), dem die Zwischensignale (INT1', INT2') zuführbar sind und an dem ausgangsseitig das Interruptsignal (IR) abgreifbar ist umfaßt.

2. Schaltungsanordnung nach Anspruch 1,
**dadurch gekennzeichnet, daß**
ein weiteres logisches Verknüpfungselement (7) vorgesehen ist, dem die Zwischensignale (INT1', INT2') zuführbar sind, und daß das dritte und das weitere logische Verknüpfungslement (6, 7) ausgangsseitig an einen Multiplexer (8) angeschlossen sind, an dem ausgangsseitig das Interruptsignal (IR) abgreifbar ist.

3. Schaltungsanordnung nach Anspruch 2,
**dadurch gekennzeichnet, daß** ein viertes logisches Verknüpfungselement (13) vorgesehen ist, das eingangsseig mit dem Ausgang des Multiplexers (8) einerseits über ein Verzögerungselement (12) und andererseits unter Umgehung dieses Verzögerungselements (12) verbunden ist, und daß das Interruptsignal (IR) ausgangsseitig am vierten logischen Verknüpfungselement (13) abgreifbar ist.

4. Schaltungsanordnung nach einem der Ansprüche 1 bis 3,
**dadurch gekennzeichnet, daß** in einer der Einrichtungen (4) zwischen dem ersten (45) oder zweiten logischen Verknüpfungslement (46) und dem Speicherelement (47) ein Schalter (48) geschaltet ist.

5. Schaltungsanordnung nach einem der Ansprüche 1 bis 4,
**dadurch gekennzeichnet, daß** ein Speicher (10) zur Speicherung von Speicherworten vorgesehen ist, dessen Speicherworte wahlweise auslesbar sind, und daß jeweils eines der Bits eines ausgelesenen Speicherwortes (C21, C31, C22, C32) an einen der Demultiplexer (43, 44) zur Steuerung dessen Schaltzustands anlegbar ist.

6. Schaltungsanordnung nach Ansprüch 5,
**dadurch gekennzeichnet, daß** eines der Bits (C41, C42) der ausgelesenen Speicherworte an den Schalter (48) zur Steuerung dessen Schaltzustands anlegbar ist.

## Claims

1. Circuit arrangement for generating an interrupt signal (IR) for a microprocessor, the activation of which causes the processing of a subroutine in the microprocessor, comprising
- at least two input signal terminals (1, 2) for the application of a respective logic signal (INT1, INT2),
**characterized in that** the circuit arrangement further comprises
- a respective device (4, 5) assigned to the input terminals (1, 2) and serving to generate an intermediate signal (INT1', INT2'),
- each of which contains a first edge detector (41) for a rising edge and a second edge detector (42) for a falling edge, which are connected on the input side to the assigned input terminal (1),
- each of which contains a demultiplexer (43, 44) connected downstream of the edge detectors (41, 42), the first outputs (43a, 44a) of which demultiplexers are connected to a first logic combination element (45), and the second outputs (43b, 44b) of which demultiplexers are connected to a second logic combination element (46), and
- contains a storage element (47), whose set input (S) is connected to the first logic combination element (45) and whose reset input (R) is connected to the second logic combination element (46) , and
- a third logic combination element (6), to which the intermediate signals (INT1', INT2') can be fed and at which the interrupt signal (IR) can be picked off on the output side.

2. Circuit arrangement according to Claim 1,
**characterized in that**
a further logic combination element (7) is provided, to which the intermediate signals (INT1', INT2') can be fed, and **characterized in that** the third and the further logic combination element (6, 7) are connected on the output side to a multiplexer (8), at which the interrupt signal (IR) can be picked off on the output side.

3. Circuit arrangement according to Claim 2,
**characterized in that** a fourth logic combination element (13) is provided, which, on the input side, is connected to the output of the multiplexer (8) via a delay element (12) on the one hand, and by bypassing this delay element (12), on the other hand, and **in that** the interrupt signal (IR) can be picked off on the output side of the fourth logic combination element (13).

4. Circuit arrangement according to one of Claims 1 to 3,
**characterized in that**
in one of the devices (4), a switch (48) is connected between the first (45) or second logic combination element (46) and the storage element (47).

5. Circuit arrangement according to one of Claims 1 to 4,
**characterized in that**
a memory (10) for storing memory words is provided, the memory words of which can optionally be read out, and **in that** in each case one of the bits of a memory word (C21, C31, C22, C32) that has been read out can be applied to one of the demultiplexers (43, 44) for the purpose of controlling the switching state thereof.

6. Circuit arrangement according to Claim 5,
**characterized in that**
one of the bits (C41, C42) of the memory words that have been read out can be applied to the switch (48) for the purpose of controlling the switching state thereof.

## Revendications

1. Arrangement de circuit destiné à générer un signal d'interruption (IR) pour un microprocesseur, dont l'activation déclenche l'exécution d'un sous-programme dans le microprocesseur, comprenant
- au moins deux bornes de signal d'entrée (1, 2) pour appliquer à chaque fois un signal logique (INT1, INT2),
**caractérisé en ce que** l'arrangement de circuit comprend en plus
- un dispositif (4, 5) à chaque fois associé à l'une des bornes d'entrée (1, 2) pour générer un signal intermédiaire (INT1', INT2')
- lequel comprend à chaque fois un premier détecteur de front (41) pour un front montant et un deuxième détecteur de front (42) pour un front descendant dont les entrées sont reliées à la borne d'entrée (1) associée,
- lequel comprend des démultiplexeurs (43, 44) à chaque fois branchés à la suite de l'un des détecteurs de front (41, 42) et dont les premières entrées (43a, 44a) sont reliées à un premier élément de fonction logique (45) et dont les deuxièmes entrées (43b, 44b) sont reliées à un deuxième élément de fonction logique (46), et
- lequel comprend un élément de mémorisation (47) dont l'entrée de mise à 1 (S) est reliée au premier élément de fonction logique (45) et dont l'entrée de mise à 0 (R) est reliée au deuxième élément de fonction logique (46), et
- un troisième élément de fonction logique (6) auquel peuvent être acheminés les signaux intermédiaires (INT1'), (INT2') et à la sortie duquel peut être prélevé le signal d'interruption (IR).

2. Arrangement de circuit selon la revendication 1, **caractérisé en ce qu'**il est prévu un élément de fonction logique supplémentaire (7) auquel peuvent être acheminés les signaux intermédiaires (INT1', INT2') et que le troisième élément de fonction logique ainsi que le supplémentaire (6, 7) sont reliés par leur sortie à un multiplexeur (8) à la sortie duquel peut être prélevé le signal d'interruption (IR).

3. Arrangement de circuit selon la revendication 2, **caractérisé en ce qu'**il est prévu un quatrième élément de fonction logique (13) dont l'entrée est reliée à la sortie du multiplexeur (8) d'un côté par le biais d'un élément de retard (12) et de l'autre côté en contournant cet élément de retard (12) et que le signal d'interruption (IR) peut être prélevé à la sortie du quatrième élément de fonction logique (13) .

4. Arrangement de circuit selon l'une des revendications 1 à 3, **caractérisé en ce qu'**un commutateur (48) est branché dans l'un des dispositifs (4) entre le premier (45) ou le deuxième élément de fonction logique (46) et l'élément de mémorisation (47).

5. Arrangement de circuit selon l'une des revendications 1 à 4, **caractérisé en ce qu'**il est prévu une mémoire (10) pour enregistrer des mots à mémoriser, dont les mots à mémoriser peuvent être lus à volonté et qu'à chaque fois l'un des bits d'un mot à mémoriser lu (C21, C31, C22, C32) peut être appliqué à l'un des démultiplexeurs (43, 44) pour commander son état de commutation.

6. Arrangement de circuit selon la revendication 5, **caractérisé en ce que** l'un des bits (C41, C42) des mots à mémoriser lus peut être appliqué au commutateur (8) pour commander son état de commutation.
